# EUROPÄISCHE PATENTANMELDUNG

(11) **EP 0 783 935 A2**
(43) Veröffentlichungstag der Anmeldung: **16.07.1997**
(21) Anmeldenummer: 97100502.0
(22) Anmeldetag: 15.01.1997
(51) Int. Cl.: B25B 7/12, B23D 29/02, B26B 17/00

(54) **Hebelübersetztes Schneidwerkzeug wie Hebel-Seitenschneider etc.**

(30) Priorität: 15.01.1996 DE 19601166; 09.08.1996 DE 19632168
(71) Anmelder: Gustav Klauke GmbH, 42855 Remscheid (DE)
(72) Erfinder: Fischer, Fritz, 42857 Remscheid (DE); Fischer, Karsten, 42857 Remscheid (DE)
(74) Vertreter: Müller, Enno, Dipl.-Ing.

(57) **Zusammenfassung**

Die Erfindung betrifft ein hebelübersetztes Schneidwerkzeug (S), wie Hebel-Seitenschneider, Hebel-Vornschneider, Hebel-Blechscheren, -Kabelschneider, -Astschneider, -Gitterrostschneider oder Hebel-Bolzenschneider, wobei die Bewegung der Zangenschenkel (3) über zwei Gelenkpunkte (4) auf Schneidbacken (1) übertragen wird und die Zangengriffe (2) im Bereich ihrer Griffschenkelköpfe (5) unmittelbar gelenkig zueinander unter Bildung eines Gewerbes (G) abgestützt sind, und wobei die unmittelbare gelenkige Abstützung der Griffschenkelköpfe (5) aufgrund von unterschiedlichen Drehachsen (14) über kreuzend zueinander angeordnete Verbindungslaschen (12) erzielt ist, und schlägt zur Erzielung einer baulich einfachen, gebrauchszuverlässigen Lösung vor, daß die Drehachsen (14) gesondert von den Gelenkpunkten (4) ausgebildet sind.

## Beschreibung

Die Erfindung bezieht sich auf ein hebelübersetztes Schneidwerkzeug, wie Hebel-Seitenschneider, Hebel-Vornschneider, Hebel-Blechscheren, -Kabelschneider, -Astschneider, -Gitterrostschneider oder Hebel-Bolzenschneider, wobei die Bewegung der Zangenschenkel über zwei Gelenkpunkte auf Schneidbacken übertragen wird und die Zangengriffe im Bereich ihrer Griffschenkelköpfe unmittelbar gelenkig zueinander abgestützt sind, und wobei die unmittelbare gelenkige Abstützung der Griffschenkelköpfe aufgrund von unterschiedlichen Drehachsen über kreuzend zueinander angeordnete Verbindungslaschen erzielt ist.

Ein hebelübersetztes Schneidwerkzeug ist durch die DE-OS 25 06 448 bekannt. Dort sitzen die Drehachsen an einer doppellagigen Kopfplatte des Schneidwerkzeuges. Schneidenseitige Verlängerungen der Griffschenkelköpfe greifen über beiderends gelenkig gefaßte Zwischenstücke an den Gelenkpunkten der Schneidbacken hebelarmartig steuernd an. Die Kopfplatte fungiert sogleich als Verbindungslasche zwischen Gelenkbolzen der Schneidbacken.

Eine hinsichtlich der genannten Kopfplatten weniger aufwendige Lösung ergibt sich durch die DE-OS 34 27 990. Hier ist der Bereich zwischen der dortigen Verbindungslasche und dem Gewerbe des hebelübersetzten Schneidwerkzeuges kopfplattenfrei. Das Gewerbe wird hier durch von den Griffschenkelköpfen ausgehende, paarweise wirkende Kurbelteile verwirklicht. Ihre frei gegeneinandertretenden Stirnenden sind verrundet und gleiten so aneinander. Eine den lichten Raum zwischen den Griffschenkelköpfen querende Zuglasche, die endseitig über je eine Drehachse mit den Zangenschenkeln in Verbindung steht, hält das Gewerbe zusammen.

Ein hebelübersetztes Schneidwerkzeug gemäß Gattung ergibt sich aus dem DE-GM 1 742 799. Dort greifen die kreuzend zueinander angeordneten Verbindungslaschen mit ihren dem Werkzeugkopf zugewandten Enden unmittelbar an den Gelenkpunkten zwischen den Schneidbacken und den Zangengriffen an. Die griffseitigen Gelenkpunkte liegen dabei in Querrichtung des Werkzeuges kürzer beabstandet als die werkzeugkopfseitigen Gelenkpunkte. Der gekreuzte Laschenbereich fällt dadurch länger aus.

Aufgabe der Erfindung ist es, ein gattungsgemäßes Schneidwerkzeug baulich einfach und gebrauchszuverlässiger auszubilden.

Gelöst ist diese Aufgabe durch die in den Ansprüchen angegebene Erfindung.

Zufolge solcher Ausgestaltung ist ein gattungsgemäßes hebelübersetztes Schneidwerkzeug erhöhten Gebrauchswerts erzielt: Die lastarmseitige Position ist wesentlich verbessert. Die dort auftretenden Kräfte verteilen sich auf mehrere Drehachsen. Konkret wird hierzu so vorgegangen, daß die Drehachsen gesondert von den Gelenkpunkten ausgebildet sind. Die entsprechend vielgliedrige Kette führt zu einem ideellen Drehpunkt als "Gewerbebolzen" mit dem Vorteil einer hebelgünstigeren Steuerung der Schneidbacken. Eine baulich günstige Ausgestaltung liegt sodann vor, wenn die Drehachsen an einem nach innen ragenden Vorsprung der Griffschenkelköpfe ausgebildet sind. Das führt zu kürzeren Verbindungslaschen und einer insgesamt noch gedrungeneren Bauform des Schneidwerkzeuges. So oder so erweist es sich als vorteilhaft, daß die Griffschenkelköpfe als paarige Brückenstücke zwischen dem Zangengriff und der Schneidbacke realisiert sind. Zum einen ergibt sich rückseitig eine vorteilhafte Anflanschmöglichkeit zu dem Zangengriff hin und schneidenseitig eine stabile Gelenkverbindung zu den Schneidbacken hin. Ebenfalls aus Gründen einer gedrungenen Bauform bei trotzdem hoher Gebrauchsstabilität wird weiter so vorgegangen, daß die Verbindungslaschen als Flachstücke mit seitlichen Eintauchnischen ausgebildet sind. Hierdurch kann die beim Öffnen des Schneidwerkzeuges auftretende Überkreuzungslage der den Zwischenraum zwischen den Griffschenkelköpfen querenden Verbindungslaschen sehr spitzwinklig ausfallen. Das begünstigt eine kurze Bauform. Bezüglich der Überkreuzungslage braucht nicht einmal eine streng quersymmetrische vorzuliegen. Es genügt schon, wenn eine Verbindungslasche auf kürzestem Wege quer zwischen den Zangenschenkeln verläuft und die andere schräg dazu. Weiter besteht eine vorteilhafte Maßnahme darin, daß die Drehachsen durch Exzenterausbildung auf einem gemeinsamen Achskörper ausgebildet sind. Bei Einzelexzentern genügt es, wenn sie an den zangengriffseitigen Drehachsen ausgebildet sind. Das ergibt eine noch wirtschaftlichere Ausbildung. Als diesbezüglich günstig erweist sich noch, daß die Drehachsen formschlüssig in den Griffschenkelköpfen angeordnet sind. Die entsprechend verdeckte Verachsung begünstigt das ästhetische Äußere des Werkzeugs. Hinsichtlich der Achsen geht auch ein besonderer Gedanke noch dahin, eine oder mehrere der Achsen der Laschen im Sinne einer Überlastsicherung auszubilden, bspw. als Scherstift. Wenn eine bestimmte, vorgebbare Belastung an den Schneiden auftritt, kann ein Abscheren einer oder mehrerer Achsen eintreten, so daß die Schneiden nicht beschädigt werden. Desweiteren kann auch vorgesehen sein, daß die Laschen, etwa durch in und außer Überdeckungslage tretende Löcher in den Laschen, als Hartdrahtschneider zusätzlich ausgebildet sind. Dies ist insbesondere dann von Bedeutung, wenn das Werkzeug als solches schneidenmäßig für Weichdrähte ausgelegt ist. Die entsprechende Schneidstelle kann auch stirnseitig, an einer Flachstirnseite der Laschen, etwa durch entsprechende schneidenartige Ausgestaltung, auch in gekrümmtem Verlauf, vorgesehen sein. Insgesamt ist eine Bauform erreicht, die ohne viel Zerspanung und somit energiesparend und umweltfreundlich erzeugt werden kann. In baulicher und auch stabilisatorischer Hinsicht erweist es sich weiter als vorteilhaft, daß der Griffschenkelkopf einen mittigen Halterungsvorsprung aufweist, an dessen Außenseiten die Verbindungslaschen gegenüberliegend angelenkt sind. Das kann in einstückiger Formgebung erreicht werden, wobei sich Griffschenkelkopf und der entsprechend erkerartige, zwei Lageraugen bildende Halterungsvorsprung gegenseitig versteifen. Günstig ist es dabei, wenn der flach ausgebildete Halterungsvorsprung nach innen in Richtung auf den gegenüberliegenden Griffschenkelkopf vorstehend ausgebildet ist. Dabei können gleich gestaltete Bauteile verwendet werden. Eine hinsichtlich der Verachsung optimierte Lösung ergibt sich weiter dadurch, daß der Halterungsvorsprung im wesentlichen Z-förmig gestaltet ist, wobei der obere und der untere Z-Schenkel als Aufnahmen der Drehachsen ausgebildet sind. Die gegenläufige Ausrichtung der Z-Schenkel bringt so auf der einen Seite einen günstigen Unterbringungsraum für die Anlenkstelle der Verbindungslasche und auf der anderen Seite viel Fleisch für eine Bohrung für die körperliche Drehachse. Endlich besteht eine vorteilhafte Ausbildung noch darin, daß beidseitig des Halterungsvorsprunges Platten aufgebracht sind, welche sich in Griffrichtung erstrecken und im Überstand zu den Halterungsvorsprüngen Lagerstellen für die Anlenkung der Schneidbacken ausbilden. Der zwischengefaßte, den Halterungsvorsprung bildende Körper wirkt dabei als Distanzstück für die gegabelte Lagerstelle. Die Befestigung der Platten kann in konventioneller Weise geschehen.

Der Gegenstand der Erfindung ist nachstehend anhand eines zeichnerisch veranschaulichten Ausführungsbeispieles näher erläutert. Es zeigt:
- Fig. 1: das Schneidwerkzeug in Form eines Hebel-Bolzenschneiders in Ansicht, und zwar bei geschlossenen Schneiden,
- Fig. 2: den Schnitt gemäß Linie II-II in Darstellung einer Abwandlung einer Drehachsen-Zuordnung,
- Fig. 3: das Schneidwerkzeug gemäß Fig. 1 bei geöffneten Schneiden,

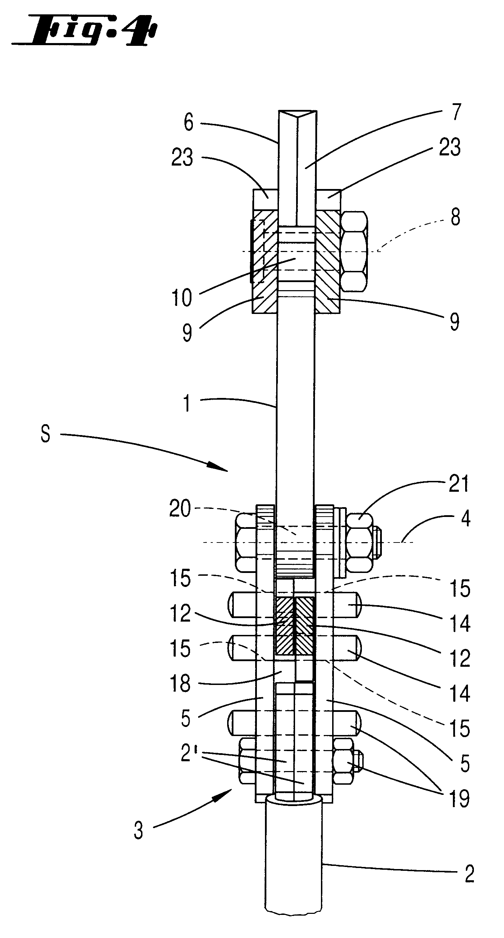

- Fig. 4: den Schnitt gemäß Linie IV-IV in Fig. 1,
- Fig. 5: eine Variante des Schneidwerkzeuges in Darstellung wie Fig. 1,
- Fig. 6: dasselbe in Darstellung wie Fig. 3,
- Fig. 7: den Schnitt gemäß Linie VII-VII in Fig. 5,
- Fig. 8: den Schnitt gemäß Linie VIII-VIII in Fig. 1, vergrößert und die Drehachsen in Exzenterausbildung wiedergebend,
- Fig. 9: eine diesbezügliche Abwandlung,
- Fig. 10: die exzentrische Drehachse gemäß Fig. 8 in perspektivischer Darstellung,
- Fig. 11: die entsprechende Drehachse gemäß Fig. 9, ebenfalls in schaubildlicher Wiedergabe,
- Fig. 12: eine weitere Variante des Hebel-Bolzenschneiders in Ansicht, und zwar bei geschlossenen Schneiden,
- Fig. 13: eine weitere Variante des Schneidwerkzeuges in Darstellung wie Fig. 1,
- Fig. 14: den Schnitt gemäß Linie XIV-XIV in Fig. 13,
- Fig. 15: das Schneidwerkzeug gemäß Fig. 13 bei geöffneten Schneiden,
- Fig. 16: einen der Griffköpfe der Variante gemäß Fig. 13, und zwar in vergrößerter perspektivischer Darstellung,
- Fig. 17: eine weitere Variante des Schneidwerkzeuges in Darstellung wie Fig. 1,
- Fig. 18: den Schnitt gemäß Linie XVIII-XVIII in Fig. 17,
- Fig. 19: das Schneidwerkzeug gemäß Fig. 17 bei geöffneten Schneiden,
- Fig. 20: den zugehörigen Griffschenkelkopf in vergrößerter perspektivischer Darstellung,
- Fig. 21: eine letzte Variante des Schneidwerkzeuges in Darstellung wie Fig. 1,
- Fig. 22: den Schnitt gemäß Linie XXII-XXII in Fig. 21 und
- Fig. 23: wiederum den zugehörigen Griffschenkelkopf, und zwar gleichfalls in perspektivischer, vergrößerter Darstellung.

Das dargestellte Schneidwerkzeug S ist ein Hebel-Bolzenschneider. Es liegt ein zangenartiger Aufbau vor.

Lastarmseitig eines Gewerbes G befinden sich Schneidbacken 1; kraftarmseitig weist das Schneidwerkzeug S relativ lange Zangengriffe 2 auf. Letztere bilden im Verein mit zangenkopfseitigen Fortsätzen die beiden Zangenschenkel 3 des Schneidwerkzeuges.

Die um das Gewerbe G stattfindende Schwenkbewegung der Zangenschenkel 3 geht über Gelenkpunkte 4, realisiert zwischen die erwähnten Fortsätze bildenden Griffschenkelköpfen 5 und schneidenabgewandten Armen a der Schneidbacken 1. Letztere setzen sich schneidenseitig in einen zweiten, kürzeren Arm b fort. Der ist das Maulteil 6 des Schneidwerkzeuges S. Am Maulteil 6 befinden sich gegeneinandergerichtete, keilförmig ausgebildete Schneiden 7.

Die Schneidbacken 1 schwenken um je einen Gelenkbolzen 8. Die durchsetzen je eine Lagerbohrung der Schneidbakken 1 und eine kongruent liegende Durchbrechung außenseitig aufgesetzter Verbindungslaschen 9.

Die Verbindungslaschen 9 erstrecken sich quer zur Symmetrieebene E-E des Schneidwerkzeuges S. Im Abdeckbereich der Verbindungslaschen 9 befindet sich ein Stützbolzen. Der ist hier in Form eines von der einen Schneidbacke 1 ausgehenden Scharniernockens 10 ausgebildet. Er weist einen halbkreisförmigen Walzenabschnitt auf, der sich peripher in einer konturentsprechenden Ausnehmung 11 der anderen Schneidbacke 1 abstützt. Selbstredend könnte hier auch ein zylindrischer Stützbolzen eingesetzt sein. Über einen solchen Stützbolzen, respektive Scharniernocken 10, wird eine gegenseitige Längsverlagerung der Schneidbacken 1 unterbunden.

Die Zangengriffe 2 bzw. Zangenschenkel 3 sind im Bereich ihrer Griffschenkelköpfe 5 unmittelbar gelenkig zueinander, das Gewerbe G bildend, abgestützt. Hierzu dienen zwei Verbindungslaschen 12. Sie nehmen einen kreuzenden Verlauf und überlagern dementsprechend einander. Das kann bis zu einer führenden Anlage gehen. Sie (12) stehen im Einsatz des Schneidwerkzeuges S unter Druck.

Die freien Enden der den das Gewerbe G aufnehmenden Zwischenraum 13 querenden Verbindungslaschen 12 greifen gelenkig an den Griffschenkelköpfen 5 an. Die die entsprechenden Gelenkstellen verkörpernden Drehachsen tragen allesamt das Bezugszeichen 14. Die schneidennahen Gelenkstellen liegen gesondert von den Gelenkpunkten 4. Es handelt sich auch bezüglich 14 um axial gesicherte Bolzen, die außer der entsprechenden Lagerbohrung der Verbindungslaschen 12 auch noch in deckungsgleich ausgerichtete Aufnahmen 15 der auch hier paarig angeordneten Griffschenkelköpfe 5 hineinragen. Die Drehachsen 14 verlaufen raumparallel zur geometrischen Achse des Gewerbes G und somit auch senkrecht zur Schwenkebene der Zangengriffe 2.

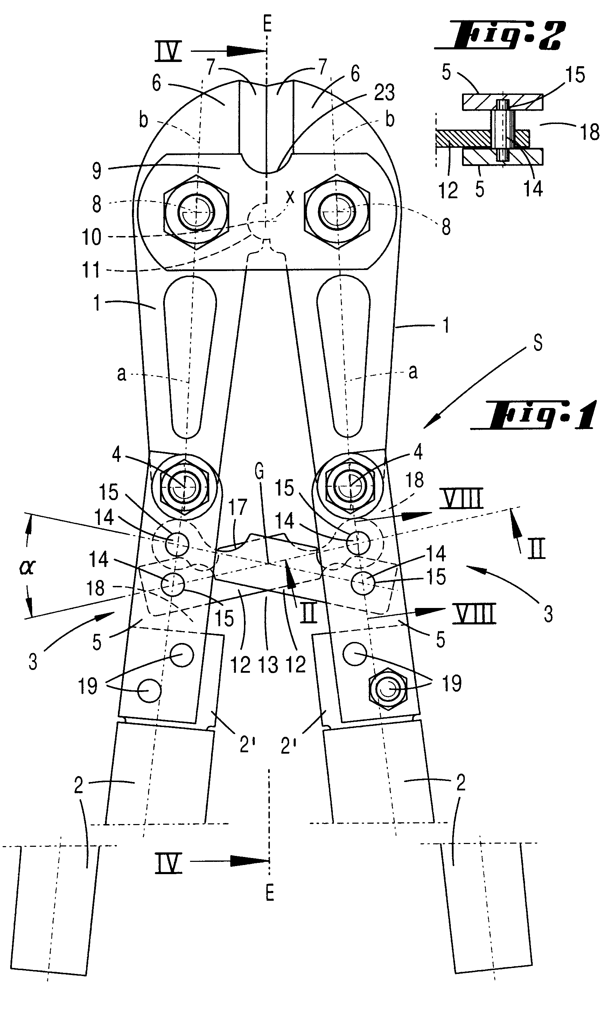

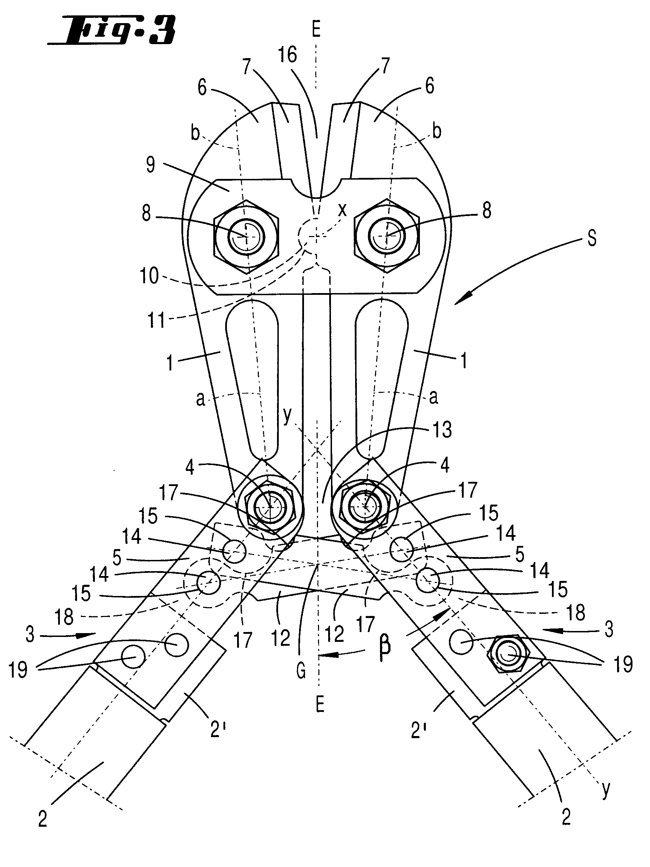

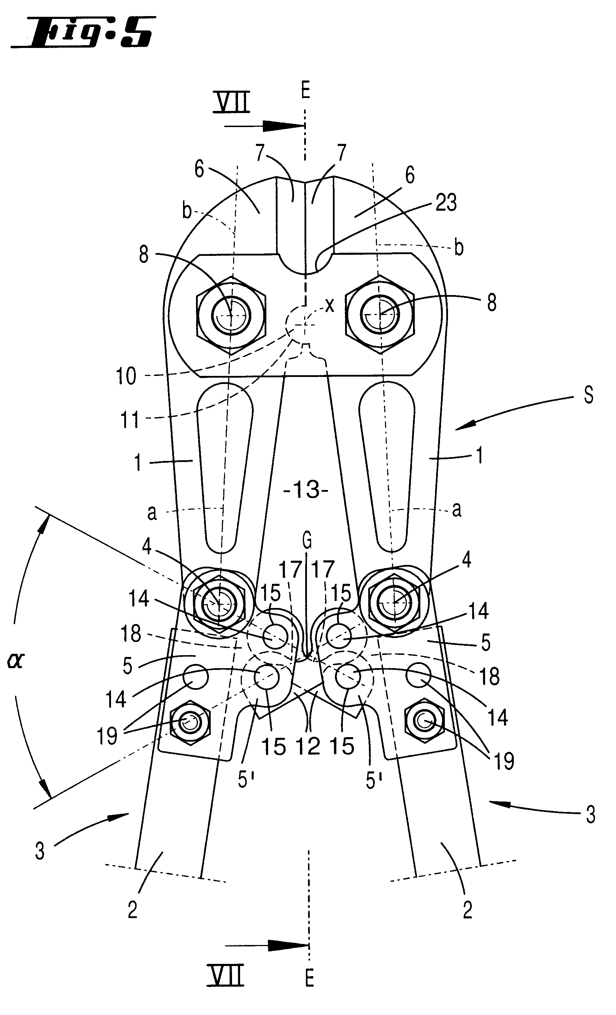

Die Drehachsen 14 liegen, in Längsrichtung der Zangengriffe 2 gesehen, hintereinander, und zwar in möglichst enger Nachbarschaft. Die überkreuzende Anordnung kommt dabei zustande, indem die Verbindungslasche 12 einerends an einer griffseitig näherliegenden Drehachse angreift und anderenends an einer schneidenseitig näherliegenden Drehachse 14. Die darüber oder darunter liegende zweite Verbindungslasche 12 erstreckt sich anlenkungsmäßig gegenläufig. Dabei wird ein spitzer Winkel Alpha von ca. 25° in Schließstellung des Schneidwerkzeugs S eingeschlossen (gemäß Variante Fig. 5 ff ca. 60°). In geöffnetem Zustand verringert sich dieser Winkel auf ca. 18° (gemäß Variante Fig. 5 ff auf ca. 40°). Unter der entsprechenden Öffnungsbewegung wandert der Achspunkt x des Scharniernockens 10 etwas in Richtung der Maulöffnung 16 des Zangenkopfes. Er liegt gemäß Fig. 3 dann auf einer zwischen den Mittelpunkten der Gelenkbolzen 8 gelegten, senkrecht zur Symmetrieebene E-E des Schneidwerkzeugs S ausgerichteten Linie. Einhergehend hiermit ist der ideelle Drehpunkt des Gewerbes G in eine kürzere Abstandslage zu diesem Achspunkt x getreten als er in Schließstellung (Fig. 1) dazu einnimmt.

Die Verteilung der im Bereich des Gewerbes G auftretenden Kräfte auf vier Stellen führt zu einem hoch belastbaren, wenig störanfälligen Werkzeug, das den Gebrauchsbeanspruchungen über längste Zeit bestens standhält. Es kommt daher auch nicht zu dem bekannten Ausschlagen der Gelenkstellen und auch Klaffen der Maulöffnung 16.

Andererseits wird diese günstige Wirkung nicht durch eine unnötige Vergrößerung des Zangenkopfes erkauft. Einen wesentlichen Beitrag leistet daher die Maßnahme, daß die Verbindungslaschen 12 als Flachstücke realisiert sind, die bequem innerhalb der in Gewerbeachsrichtung liegenden Dicke gut unterbringbar sind. Außerdem sind Vorkehrungen getroffen, die das oben schon angedeutete "Verflachen" des Kreuzgelenkes begünstigen, nämlich seitliche Eintauchnischen 17, abgestimmt auf den entsprechenden Bewegungsraumbedarf der beim Öffnen des zangenartigen Schneidwerkzeuges S mehr und mehr in einen größeren Öffnungswinkel Beta zur Symmetrieebene E-E tretenden schneidenseitigen Drehachsen 14, die zu den griffseitigen auf einer gemeinsamen Längslinie y-y liegen, mit welcher Längslinie y-y die Erstreckungsrichtung der Zangengriffe 2 im wesentlichen zusammenfällt.

Gemäß Variante (Fig. 5 ff) ist die die Drehachsen 14 in ihrem Zentrum schneidende Längslinie y-y weiter in Richtung des Zwischenraumes 13 verlegt. Dementsprechend fallen hier die Verbindungslaschen 12 kürzer aus. Die Bezugsziffern sind sinngemäß angewandt, zum Teil ohne textliche Wiederholungen. Baulich sieht die entsprechende Weiterbildung so aus, daß die Drehachsen 14 nun an einem nach innen ragenden Vorsprung 5' der Griffschenkelköpfe 5 gelenkig angreifen. Der in dieser Richtung liegende Parallelversatz entspricht etwa dem doppelten Achsabstand der auf der gemeinsamen Längslinie y-y liegenden Drehachsen 14.

Hier wie dort ist auch noch eine Variante denkbar, gemäß welcher die den Schneiden 7 näherliegenden Enden der Verbindungslaschen 12 gleich auf die die Gelenkpunkte 4 bildenden Achsen aufgesteckt werden. Das führt zu einer noch gedrungeneren Bauform, indem die Griffschenkelköpfe 5 an den Zangengriffen 2 zum Zangenkopf hin in kürzerem Überstandsmaß ausgebildet werden können.

Die paarig ausgebildeten, gleichförmigen Griffschenkelköpfe 5 fungieren gemäß dem Grundausführungsbeispiel als einen Unterbringungsraum 18 in der Grifferstreckungsrichtung belassende Brückenstücke. Dessen in der Achsrichtung des Gewerbes G gemessene Breite entspricht mindestens der doppelten Dicke einer Verbindungslasche 12. Es kann auch hier eine führende Anlage an den Innenseiten der Griffschenkelköpfe 5 genutzt werden. Bestimmt wird die in Griffrichtung liegende Länge des Unterbringungsraumes 18 durch die Lage des zwischengefaßten Endes 2' des Zangengriffes 2 und des von den Brückenstücken mitgebildeten Lagerauges für den längeren Arm a der Schneidbacken 1.

Bezüglich des erwähnten zwischengefaßten Endes 2' kann es sich um Einsatzplatten handeln. Diese sind in die hier rohrförmig gestalteten Zangengriffe 2 eingesteckt und dort fixiert. Zwischen dem Ende 2' und den Brückenstücken ist eine Vernietung oder Verschraubung vorgenommen. Die entsprechenden Befestigungselemente tragen das Bezugszeichen 19. Schrauben erlauben eine jederzeitige Umrüstung.

Gemäß Variante Fig. 5 sind die Griffschenkelköpfe 5 auf die Zangengriffe 2 aufgesetzt. Es handelt sich hier um Vollmaterial kreisrunden Querschnitts. Im Aufsetzbereich sind Abflachungen vorgenommen. Die Befestigungselemente 19 liegen hier in Linie, während sie gemäß dem Grundausführungsbeispiel auf einer die Längslinie y-y schräg kreuzenden Linie angeordnet sind. Ein besonderer Gedanke schlägt auch vor, daß jedenfalls ein als Stift ausgebildetes Befestigungselement 19 auch als Exzenter ausgebildet sein kann, dies etwa in Zusammenwirkung mit einem Langloch in dem Ende 2'. So kann in einfacher Weise eine Anpassung vorgenommen werden. Die Exzenter der Laschenachsen könnten dann gegebenenfalls in Wegfall kommen.

Die Gelenkpunkte 4 sind von je einem Schraubbolzen 20 gebildet, dessen Mutter 21 eine Drehsicherung gegen Selbstlösen aufweist (nicht dargestellt). Das gilt auch bezüglich der schraubtechnischen Befestigungselemente 19.

Statt die Dicke der plattenförmigen Griffschenkelköpfe 5 vollständig durchsetzender Drehachsen 14, was aus stabilisatorischen Gründen bevorzugt wird, können diese, wie gemäß Fig. 2 verdeutlicht, auch verdeckt zugeordnet sein, indem die Aufnahmen 15 nicht als durchgehende Bohrung ausgebildet sind, sondern als von der Innenseite des Unterbringungsraumes 18 ausgehende Sackbohrungen. Die Fesselung ergibt sich dann über den Bereich der Gelenkpunkte 4 und die Befestigungselemente 19. Die Steckenden dieser Drehachsen 14 sind abgesetzt. So wirkt der eigentliche achsbildende Part zugleich als Distanzbolzen.

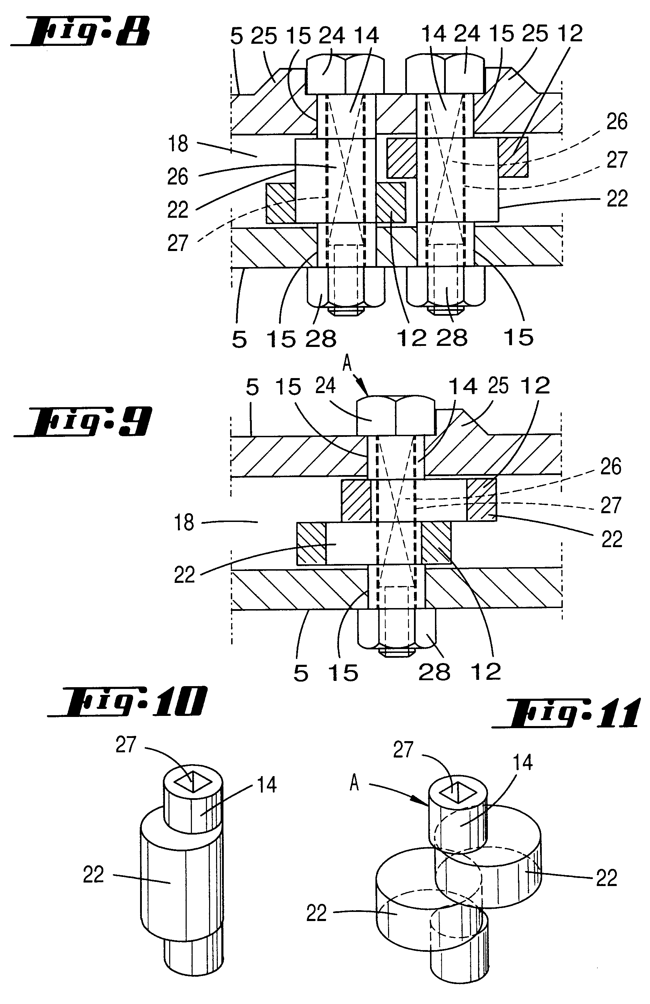

Fig. 8 zeigt eine Variante der Drehachsen 14 dahingehend, daß diese im anlenkseitigen Teil als Exzenter 22 realisiert sind. Hierüber kann eine Feinjustierung im Überkreuzungsbereich des Gewerbes G vorgenommen werden, etwa im Sinne der Kompensierung bestimmter ungünstiger Toleranzpaarungen.

Ebenfalls als Exzenter kann der die Gelenkpunkte 4 stellende Schraubbolzen 20 verwirklicht werden. Hierüber ließe sich ein etwaiges Klaffen der Schneiden 7 beseitigen. Überhaupt läßt sich auf diesem Wege auch das Profil der Maulöffnung 16 in gewissen Grenzen bestimmen.

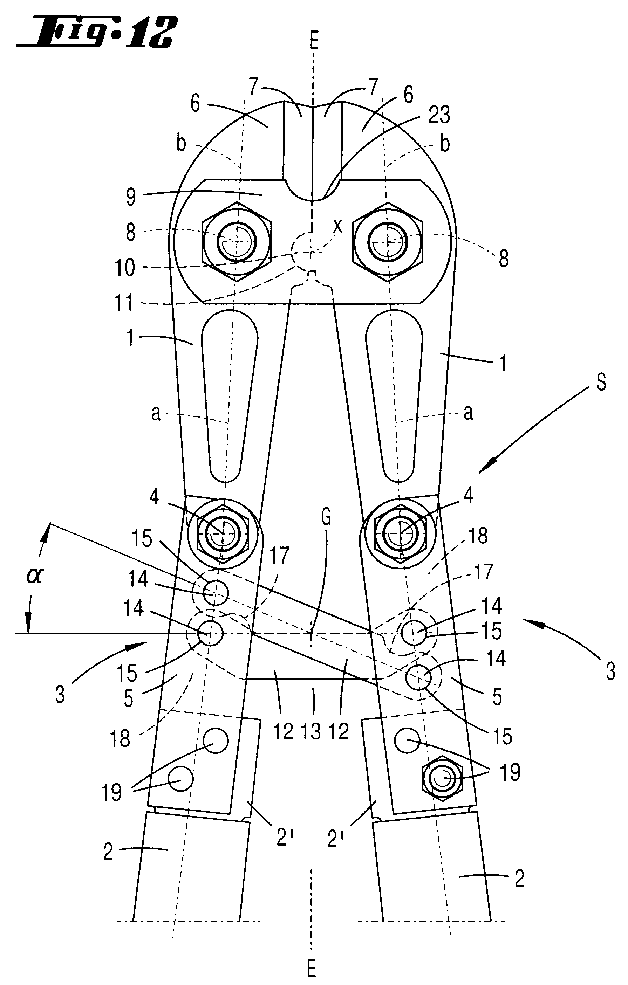

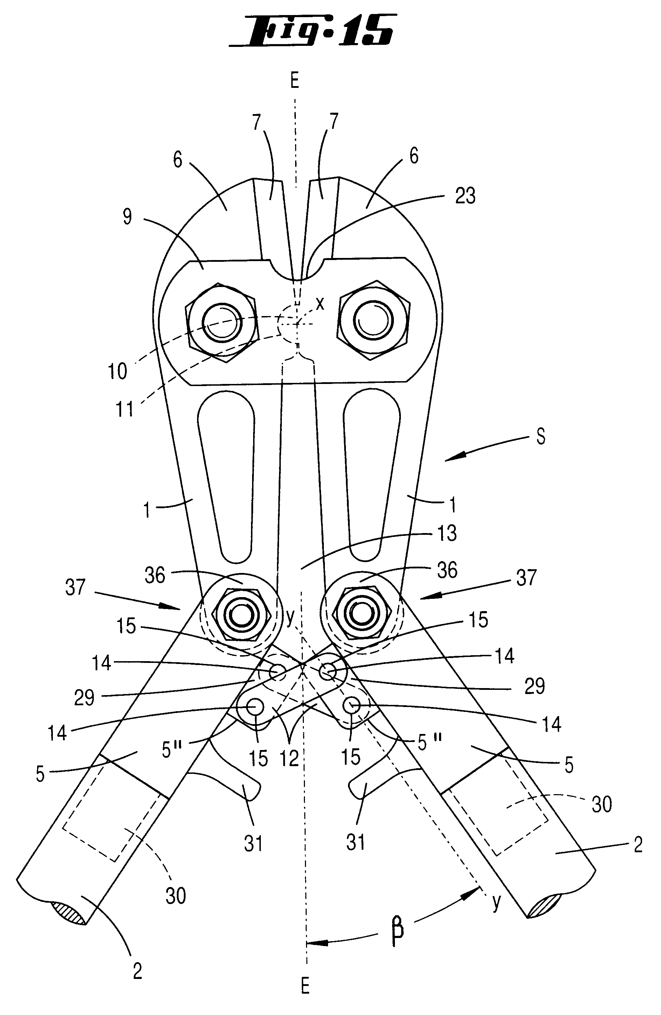

Fig. 9 und 11 geben eine baulich noch weitergehende Lösung dergestalt an, daß zwei Drehachsen durch Exzenterausbildung auf einem gemeinsamen Achskörper A verwirklicht ist. Die dortigen Exzenter 22 befinden sich auf einer Diametralen liegend. Selbstverständlich kann eine Zuordnung greifen, gemäß der die Exzenter 22 in Bezug auf die geometrische Achse des Achskörpers A bspw. in einem rechten Winkel zueinander angeordnet sind. Um den Achskörper A selbst gegen Drehung in seiner Aufnahme 15 zu sichern, kann ein unrunder Querschnitt gewählt werden oder bspw. eine Rauhung, insbesondere Längsriefung an der Mantelwand vorgenommen sein. Ansonsten kann der Achskörper A auch freibeweglich in der, respektive den Aufnahmen 15 sitzen.

Eine schneidenseitige Auskehlung 23 der Verbindungslaschen 9 vergrößert die schneidwirksame Länge der Maulöffnung 16 in Richtung x.

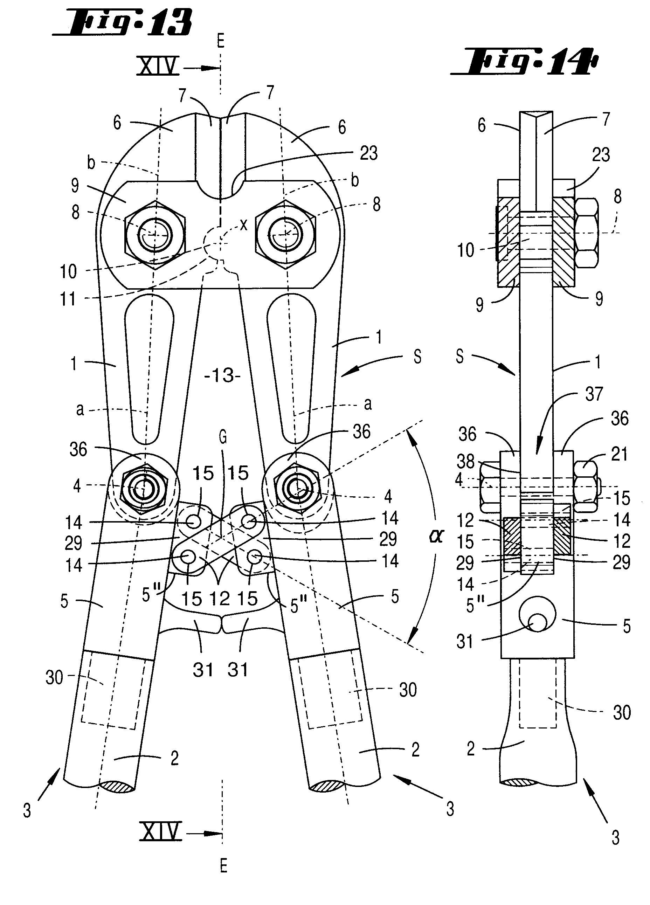

Eine praktische Art einer Exzenterverstellung ist der DE-PS 969 950 entnehmbar und anwendbar. Um sowohl den die Gelenkpunkte bildenden Einzelexzenter der Drehachsen 14 als auch den Achskörper A von den freien Enden her mit den Verbindungslaschen 12 bestücken zu können und in die durchgehenden Aufnahmen 15 einsetzen zu können, geben die Figuren 8 bis 11 eine weitergehende Lösungsmöglichkeit an. Die besteht einfach in der Verwendung die Drehachsen 14 zentral durchsetzender Schrauben. Deren Schraubenkopf 24 ist hexagonal. Die entsprechenden, den Sechskant bildenden Abflachungen lassen sich drehsperrend vor einen ortsfesten Anschlag 25 stellen. Der Anschlag 25 befindet sich auf der Außenseite der Griffschenkelköpfe 5. Er kann integral mit diesen ausgebildet sein. Der Schaft 26 der Schraube ist unrund, vorzugsweise im Querschnitt quadratisch. Die Drehachsen 14 weisen eine querschnittsentsprechende Durchbrechung 27 auf. Das eine Mutter 28 aufnehmende Ende des Schaftes 26 trägt Gewinde, welches mit dem entsprechenden Gegengewinde der Mutter zusammenwirkt. Auch hier kann es sich um reibungsschlüssig zugeordnete Muttern 28 handeln.

Zur Veränderung der Exzenterstellung braucht lediglich die Mutter 28 losgeschraubt zu werden. Danach läßt sich der Kopf 24 über den drehsperrend wirkenden Bereich des Anschlags 25 anheben und um einen weiteren Schritt verstellen. Nach Zurückschieben der Schraube läßt sich die Mutter 28 wieder betriebsgerecht zuordnen.

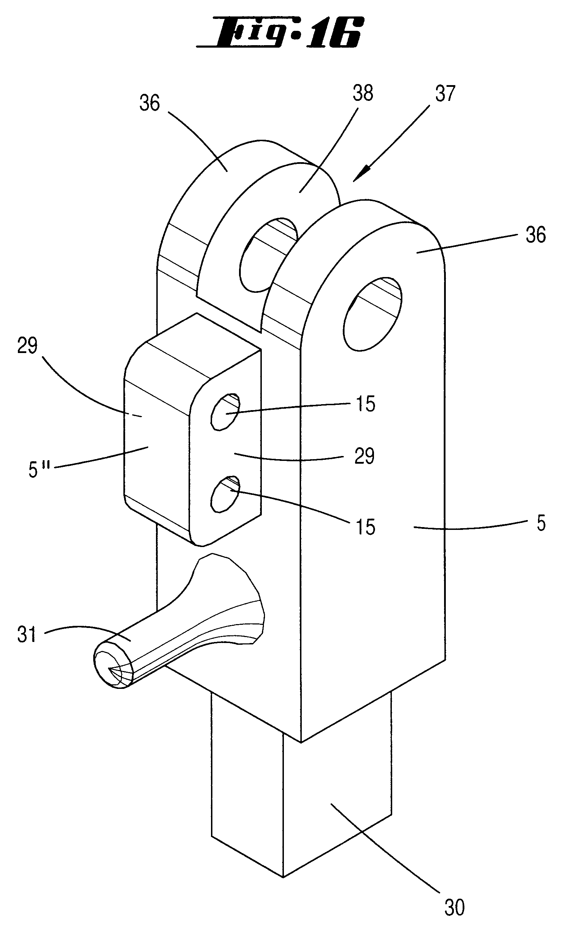

Die in Fig. 12 festgehaltene Variante ist prinzipiell gleichen Aufbaues wie die vorerörterten Versionen. Die Bezugsziffern sind entsprechend übertragen. Der voraufgegangene Text läßt sich auf die letzte Version lesen. Unterschiedlich ist lediglich, daß die eine Verbindungslasche 12 den Zwischenraum 13 zwischen den Zangenschenkeln 3 des Schneidwerkzeuges S im Bereich des Gewerbes G auf kürzestem Wege quert. Besagte Verbindungslasche 12 erstreckt sich also senkrecht zur längsgerichteten Symmetrieebene E-E des Schneidwerkzeuges S. Die andere Verbindungslasche 12 kreuzt die erstgenannte Verbindungslasche 12. Deren linksseitige Drehachse 14 liegt schneidenseitig der Drehachse 14 der erstgenannten Verbindungslasche. Die rechtsseitige Anlenkung ist in Gegenrichtung vorverlagert, also in Richtung des rechtsseitigen Zangengriffes 2, ebenfalls über eine Drehachse 14 gehend. Auch hier sind Eintauchnischen 17 zur Sicherstellung der Betätigungsbeweglichkeit berücksichtigt.

Selbstredend kann auch eine gegenläufige Kreuzung der in der Draufsicht oben liegenden Verbindungslasche 12 greifen.

Den griffseitigen Drehachsen 14 sind auch hier die eingehend beschriebenen Exzenter zuordbar.

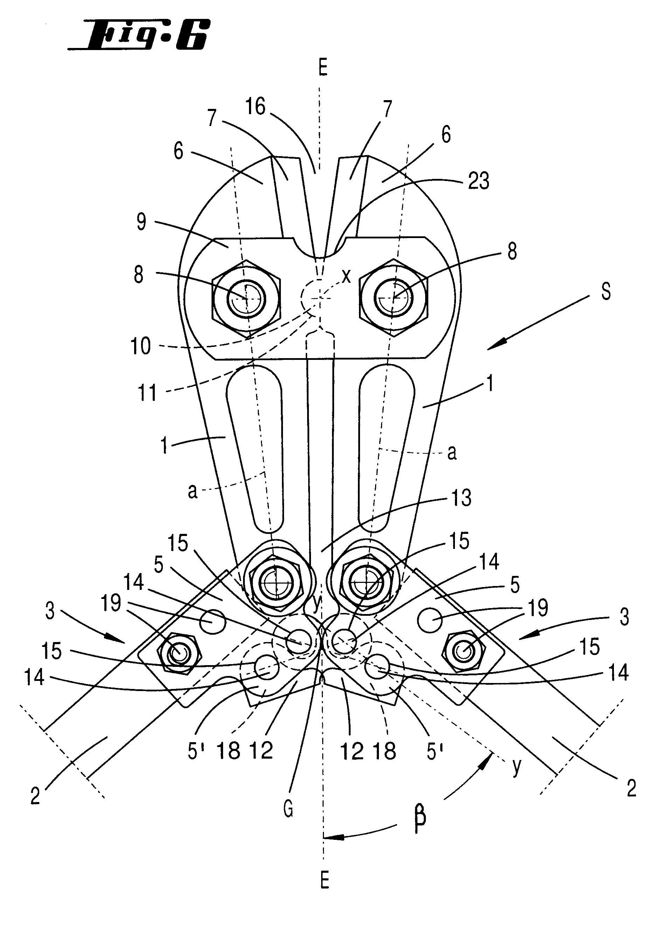

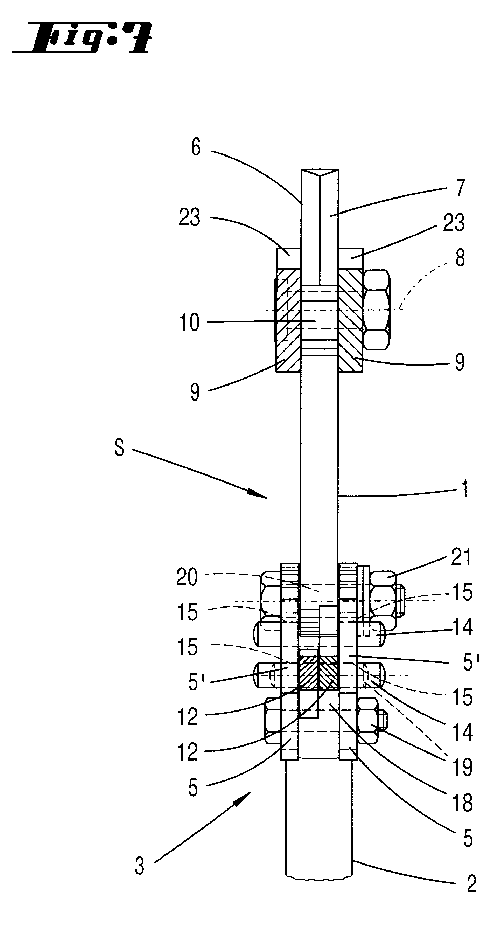

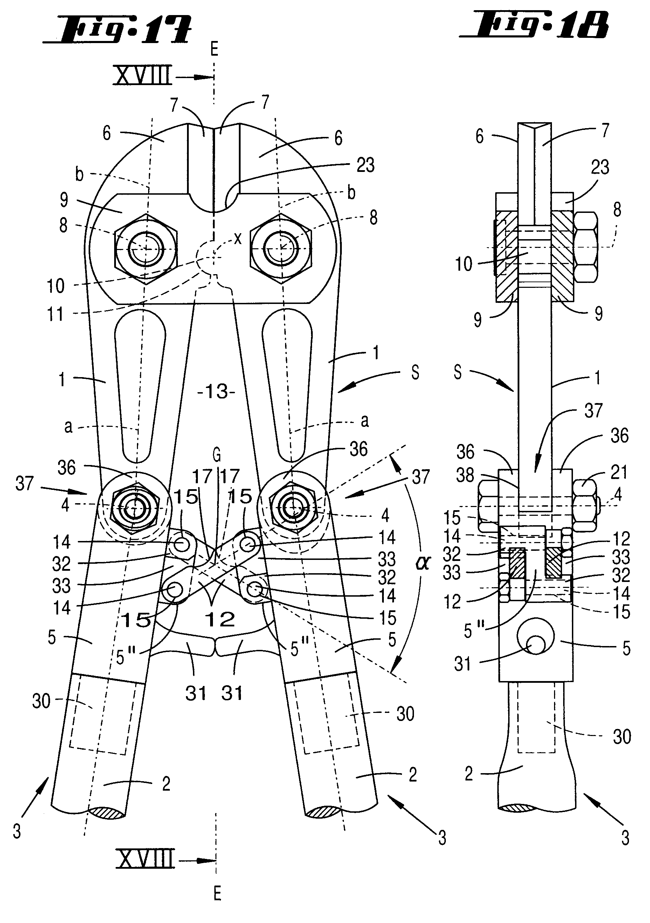

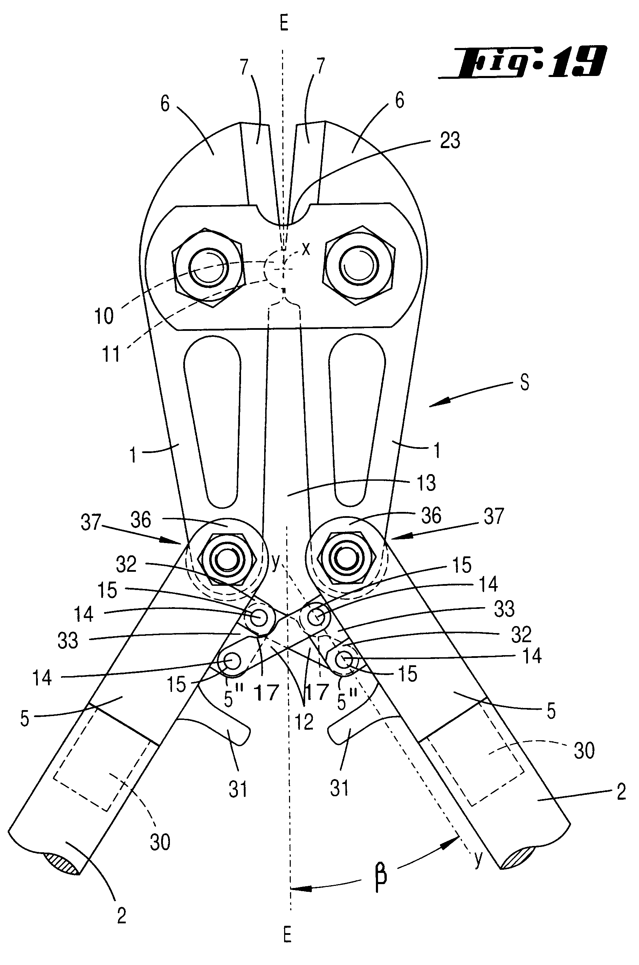

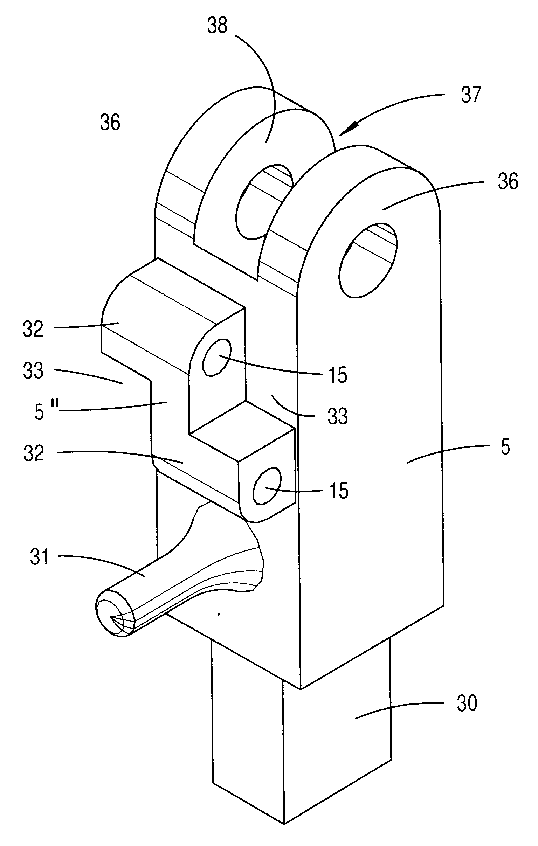

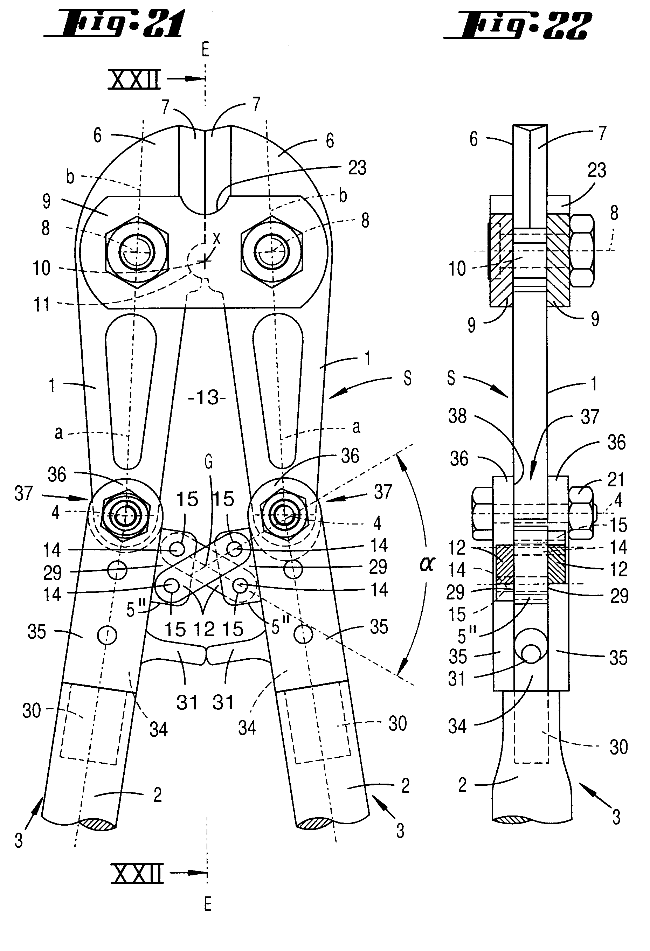

Die noch anschließenden drei Varianten gemäß Fig. 13 bis 23 sind grundsätzlich gleichen Aufbaues wie die vorbeschriebenen Versionen. Eine baulich engere Verwandtschaft besteht jedoch zum Gegenstand der Fig. 5 bis 7. Die Bezugsziffern sind, um Wiederholungen des Textes zu vermeiden, ohne weitere Kommentierung angewandt.

Unterschiedlich ist hauptsächlich der Bereich des Gewerbes G. Bezugnehmend auf die Fig. 13 bis 16 ergibt sich dabei ein Aufbau dergestalt, daß der Griffschenkelkopf 5 nun als kompaktes Steckteil realisiert ist, von dessen dem Zwischenraum 13 zugewandten Innenbereich ein mittiger Halterungsvorsprung 5'' ausgeht. Er ist in Form eines Doppelauges gestaltet und flach ausgebildet. Seine mittige Lage ist aus der Fig. 14 gut erkennbar.

Die auch hier kreuzweise angelenkten Verbindungslaschen 12 gehen von den einander gegenüberliegenden Außenseiten 29 des leistenförmigen Halterungsvorsprunges 5'' aus. Auch hier sind die erläuterten Drehachsen 14 eingezogen.

Erkennbar ist die kreuzende Ausrichtung der Verbindungslaschen 12 auf engstem Raum hinter den Gelenkpunkten 4 realisiert, also auch hier so, daß die Drehachsen 14 gesondert von den Gelenkpunkten 4 ausgebildet sind.

Ähnlich wie beim erläuterten zwischengefaßten Ende 2' setzt sich der Griffschenkelkopf 5 in Richtung der Zangengriffe 2 in einen integralen Steckvorsprung 30 fort. Letzterer ist gegenüber dem Querschnitt des Griffschenkelkopfes 5 deutlich abgesetzt und mit dem dortigen Ende des Zangengriffes 2 steckverbunden und in der üblichen Weise gesichert. Der Absatz wirkt steckbegrenzend.

Griffseitig liegend geht, in gleicher Richtung freiragend, von der Innenseite des Griffschenkelkopfes 5 ein Schließbegrenzungsanschlag 31 aus. Der ist in Form eines Dornes realisiert und trifft gegen einen entsprechenden Schließbegrenzungsdorn 31 des anderen Griffschenkelkopfes 5, der identisch ausgebildet ist.

Die Dicke des mittigen, leistenförmigen Halterungsvorsprunges 5'' und die hinzugenommenen Dicken der Verbindungslaschen 12 sind von einer Gesamtdicke, die unter der in dieser Richtung gemessenen Breite des Griffschenkelkopfes 5 liegt.

Die weitere Ausgestaltung ist so, daß der flach ausgebildete Halterungsvorsprung 5'' nach innen in Richtung auf den gegenüberliegenden Griffschenkelkopf 5 vorstehend ausgebildet ist.

Die Variante gemäß Fig. 17 bis 19 unterscheidet sich bei sonst gleicher Bauform dadurch, daß dort der Halterungsvorsprung 5'' des auch hier kompakt gestalteten Griffschenkelkopfes 5 im wesentlichen Z-förmig profiliert ist. Hierdurch lassen sich axial längere Aufnahmen 15 für die körperlichen Drehachsen 14 erreichen. Hierzu sind die gegenläufig ausgerichteten Z-Schenkel 32 herangezogen. Diese gehen bis zur Oberseite bzw. Unterseite des Griffschenkelkopfes 5. In den im Rücken der Z-Schenkel 32 belassenen Nischen 33 kommen die jeweils anlenkseitigen Enden der Verbindungslaschen 12 unter einschließlich etwaiger Köpfe der bspw. als Schrauben realisierten Drehachsen 14. Die Z-Profile sind im Hinblick auf die Laschenkreuzung gegenläufig, also nicht spiegelbildlich bzw. kongruent.

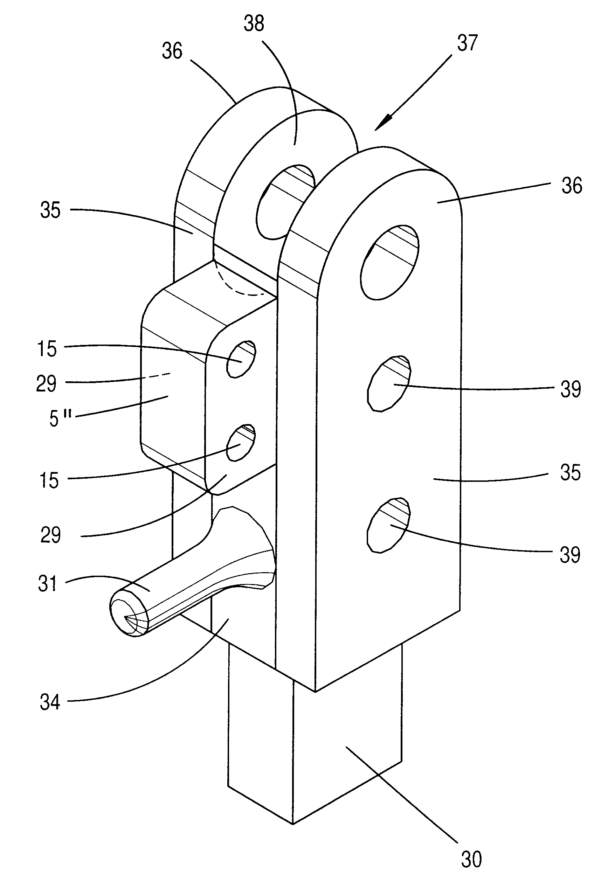

Eine entsprechend raumgünstige Unterbringung der kreuzweise verlaufenden Verbindungslaschen 12 im Zwischenraum 13 liegt auch bezüglich der in den Fig. 21 bis 23 veranschaulichten Variante vor. Diese fußt gestaltungsmäßig auf der Lösung gemäß Fig. 13 ff, nur daß hier eine Mehrteiligkeit bevorzugt ist, die in bestimmten Fällen nützlich sein kann. Die Bezugsziffern aus der Variante gemäß Fig. 13 bis 16 sind entsprechend angewandt. Der Halterungsvorsprung 5'' ist hier als Mittelteil realisiert, welches sich bis in den Steckvorsprung 30 einteilig fortsetzt unter Berücksichtigung eines Zwischenabschnitts 34, von welchem der Schließbegrenzungsdorn 31 ausgeht.

Der Halterungsvorsprung 5'' trägt außen aufgesetzte Platten 35. Die erstrecken sich in Griffrichtung. Die Platten 35 befinden sich beiderends in Überstand zu dem Halterungsvorsprung 5''. Schneidbackenseitig formen sie Lageraugen 36 einer gabelförmigen Anlenkstelle 37 für die Schneidbacken 1. Das lageraugenähnlich gestaltete Ende der bei 4 angelenkten Schneidbacken 1 liegt gut geführt in der so erzielten Gabelhöhlung 38.

Die Platten 35 fassen den Zwischenabschnitt 34 nebst Wurzelbereich des Halterungsvorsprunges 5'' sandwichartig zwischen sich. Aus Fig. 23 sind Befestigungslöcher 39 in den Platten 35 erkennbar, welche Löcher deckungsgleich liegen zu entsprechenden Löchern des zwischengefaßten Bauteils.

Schließlich bleibt noch festzuhalten, daß die in Längsrichtung hintereinanderliegenden Drehachsen 14 zu den Griffen 2 hin divergieren. Hier liegen also die dem Kopf des Schneidwerkzeuges S näherliegenden Gelenkstellen der Drehachsen 14 in Querrichtung in kürzerem Abstand als die griffseitigen.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

**1.** Hebelübersetztes Schneidwerkzeug (S), wie Hebel-Seitenschneider, Hebel-Vornschneider, Hebel-Blechscheren, -Kabelschneider, -Astschneider, -Gitterrostschneider oder Hebel-Bolzenschneider, wobei die Bewegung der Zangenschenkel (3) über zwei Gelenkpunkte (4) auf Schneidbacken (1) übertragen wird und die Zangengriffe (2) im Bereich ihrer Griffschenkelköpfe (5) unmittelbar gelenkig zueinander unter Bildung eines Gewerbes (G) abgestützt sind, und wobei die unmittelbare gelenkige Abstützung der Griffschenkelköpfe (5) aufgrund von unterschiedlichen Drehachsen (14) über kreuzend zueinander angeordnete Verbindungslaschen (12) erzielt ist, dadurch gekennzeichnet, daß die Drehachsen (14) gesondert von den Gelenkpunkten (4) ausgebildet sind.

**2.** Hebelübersetztes Schneidwerkzeug nach Anspruch 1 oder insbesondere danach, dadurch gekennzeichnet, daß die Drehachsen (14) an einem nach innen ragenden Vorsprung (5') der Griffschenkelköpfe (5) ausgebildet sind.

**4.** Hebelübersetztes Schneidwerkzeug nach einem oder mehreren der vorhergehenden Ansprüche oder insbesondere danach, dadurch gekennzeichnet, daß die Griffschenkelköpfe (5) als paarige Brückenstücke zwischen dem Zangengriff (2) und der Schneidbacke (1) realisiert sind.

**4.** Hebelübersetztes Schneidwerkzeug nach einem oder mehreren der vorhergehenden Ansprüche oder insbesondere danach, dadurch gekennzeichnet, daß die Verbindungslaschen (12) als Flachstücke mit seitlichen Eintauchnischen (17) ausgebildet sind.

**5.** Hebelübersetztes Schneidwerkzeug nach einem oder mehreren der vorhergehenden Ansprüche oder insbesondere danach, dadurch gekennzeichnet, daß die Drehachsen (14) durch Exzenterausbildung auf einem gemeinsamen Achskörper (A) ausgebildet sind.

**6.** Hebelübersetztes Schneidwerkzeug nach einem oder mehreren der vorhergehenden Ansprüche oder insbesondere danach, dadurch gekennzeichnet, daß die Drehachsen (14) formschlüssig in den Griffschenkelköpfen (5) angeordnet sind.

**7.** Hebelübersetztes Schneidwerkzeug nach einem oder mehreren der vorhergehenden Ansprüche oder insbesondere danach, dadurch gekennzeichnet, daß der Griffschenkelkopf (5) einen mittigen Halterungsvorsprung (5'') aufweist, an dessen Außenseiten (29) die Verbindungslaschen (12) gegenüberliegend angelenkt sind.

**8.** Hebelübersetztes Schneidwerkzeug nach einem oder mehreren der vorhergehenden Ansprüche oder insbesondere danach, dadurch gekennzeichnet, daß der flach ausgebildete Halterungsvorsprung (5'') nach innen in Richtung auf den gegenüberliegenden Griffschenkelkopf (5) vorstehend ausgebildet ist.

**9.** Hebelübersetztes Schneidwerkzeug nach einem oder mehreren der vorhergehenden Ansprüche oder insbesondere danach, dadurch gekennzeichnet, daß der Halterungsvorsprung (5'') im wesentlichen Z-förmig gestaltet ist, wobei der obere und der untere Z-Schenkel (32) als Aufnahmen (15) der Drehachsen (14) ausgebildet sind.

**10.** Hebelübersetztes Schneidwerkzeug nach einem oder mehreren der vorhergehenden Ansprüche oder insbesondere danach, dadurch gekennzeichnet, daß beidseitig des Halterungsvorsprunges (5'') Platten (35) aufgebracht sind, welche sich in Griffrichtung erstrecken und im Überstand zu den Halterungsvorsprüngen (5'') Lagerstellen (37) für die Anlenkung der Schneidbacken (1) ausbilden.
